(19) Europäisches Patentamt
European Patent Office
Office européen des brevets

(11) **EP 1 792 266 B1**

(12) **EUROPÄISCHE PATENTSCHRIFT**

(45) Veröffentlichungstag und Bekanntmachung des Hinweises auf die Patenterteilung:
**12.07.2017 Patentblatt 2017/28**

(51) Int Cl.:
**G06K 9/22** (2006.01)   **G07C 9/00** (2006.01)

(21) Anmeldenummer: **05772925.3**

(86) Internationale Anmeldenummer:
**PCT/EP2005/008970**

(22) Anmeldetag: **19.08.2005**

(87) Internationale Veröffentlichungsnummer:
**WO 2006/021372 (02.03.2006 Gazette 2006/09)**

(54) **VERFAHREN UND VORRICHTUNG ZUM ERFASSEN EINER EIGENHÄNDIG AUSGEFÜHRTEN UNTERSCHRIFT ODER SIGNATUR UND ZUM ERKENNEN DER ECHTHEIT DER UNTERSCHRIFT ODER SIGNATUR**

METHOD AND DEVICE FOR DETECTING A HAND-WRITTEN SIGNATURE OR MARK AND FOR RECOGNISING THE AUTHENTICITY OF SAID SIGNATURE OR MARK

PROCEDE ET DISPOSITIF DE DETECTION D'UNE SIGNATURE OU D'UNE MARQUE MANUSCRITE, ET DE RECONNAISSANCE DE L'AUTHENTICITE D'UNE TELLE SIGNATURE OU MARQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.08.2004 DE 102004040607**
**26.11.2004 DE 102004057157**

(43) Veröffentlichungstag der Anmeldung:
**06.06.2007 Patentblatt 2007/23**

(73) Patentinhaber: **Softpro GmbH**
**71034 Böblingen (DE)**

(72) Erfinder: **HAID, Markus**
**70567 Stuttgart (DE)**

(74) Vertreter: **Schöniger, Franz-Josef**
**Betten & Resch**
**Patent- und Rechtsanwälte PartGmbB**
**Maximiliansplatz 14**
**80333 München (DE)**

(56) Entgegenhaltungen:
**WO-A1-00/62244**    **US-A- 5 022 086**
**US-A- 5 559 895**    **US-A- 6 148 093**

- **ANONYMOUS: "Signature Verification Based on Complete Accelerometry. May 1977." IBM TECHNICAL DISCLOSURE BULLETIN, Bd. 19, Nr. 12, 1. Mai 1977 (1977-05-01), Seiten 4827-4829, XP002351628 New York, US**
- **PLAMONDON R ET AL: "AUTOMATIC SIGNATURE VERIFICATION AND WRITER IDENTIFICATION. ÖTHE STATE OF THE ART", PATTERN RECOGNITION, ELSEVIER, GB, vol. 22, no. 2, 1 March 1989 (1989-03-01), pages 107-131, XP000461073, ISSN: 0031-3203, DOI: 10.1016/0031-3203(89)90059-9**

EP 1 792 266 B1

**Beschreibung**

Die Erfindung betrifft ein Verfahren zum Erfassen einer eigenhändig ausgeführten Unterschrift oder Signatur im weitesten Sinn, wobei die Unterschrift oder Signatur zur Erfassung auf einer, insbesondere im wesentlichen 2-dimensionalen Fläche oder Unterlage eigenhändig ausgeführt und hierbei mittels 3-dimensionaler Inertialsensorik erfasst wird. Es werden also bei der eigenhändigen Ausführung der Unterschrift Beschleunigungsmesswerte und/oder Messwerte von Drehratensensoren, also Inertialsensorsignale im weitesten Sinn erfasst, die als solche gespeichert oder sofort oder später einer weiteren Datenverarbeitung zugeführt werden, um hieraus insbesondere digital speicherbare Daten zu gewinnen, die dann für einen Vergleich mit entsprechenden Daten einer anderen Unterschrift oder Signatur heranziehbar sind.

Ein solches Verfahren ist bereits aus WO-A-98/12661 bekannt. Nach diesem stand der Technik soll ein erster Datenstrom auf der Grundlage einer zweidimensionalen Objektverfolgung (2-dimensional tracking) und ein zweiter Datenstrom auf der Grundlage von sechs Freiheitsgraden im Raum (6-dimensional tracking) erfasst werden; ferner soll als dritter Datenstrom eine Kontaktüberwachung zur Schreibunterlage und als vierter Datenstrom eine Zeitüberwachung als Referenz bei der Datennahme der ersten drei Datenströme berücksichtigt werden. Es wird letztenendes eine zweidimensionale Objektverfolgung auf der Schreibunterlage und eine dreidimensionale Objektverfolgung mit Orientierungsüberwachung kombiniert. Hierdurch sollte eine höhere Genauigkeit erreicht werden. Die Druckschrift "Signature Verification Based on Complete Accelerometry", May 1977, IBM TECHNICAL DISCLOSURE BULLETIN, Bd. 19, Nr. 12, 1. Mai 1977 (1977-05-01), Seiten 4827-4829, X002351628, New York, US, beschreibt ein Verfahren zum Erfassen und Beurteilen einer Unterschrift auf Echtheit, indem die Unterschrift mittels dreidimensionaler Inertialsensorik erfasst und gespeichert wird, wobei aus dabei ermittelten Beschleunigungswerten zusätzliche Messgrößen errechnet werden.

Die Druckschrift US-A-6 148 093 beschreibt ein System zur Verifikation einer Unterschrift oder Signatur, bei der die Bewegung während des Unterschreibens bzw. Signierens aufgezeichnet und in verschiedenen Datenströmen abgespeichert wird.

Die Druckschrift US 5 022 086 beschreibt die Verwendung einer 3-Achsen-Kraftmessung zur Verifikation einer Unterschrift oder Signatur, wobei anhand der z-Achsen-Messwerte das Aufdrücken des Stifts auf die Schreibebene bestimmt wird und zur Verifikation die Bewegung in der x-y-Ebene ausgewertet wird.

Die Druckschriften US 5 559 895 und WO 00/62244 befassen sich mit Systemen zur Verifikation von Unterschriften oder Signaturen, bei denen die Unterschriften bzw. Signaturen mittels einem als Schreibbereich dienenden Tablet erfasst werden.

Die Druckschrift "Automatic signature verification and writer identification - the state of the art" von R. Palmondon et al., in Pattern Recognition, Bd. 22, Nr. 2, 1. März 1989, Seiten 107-131, befasst sich mit der automatischen Verifikation von Unterschriften und gibt einen umfassenden Überblick über den Stand der Technik. Der vorliegenden Erfindung liegt die Aufgabe zugrunde, die Sicherheit bei der Echtheitsprüfung einer Unterschrift oder Signatur weiter zu erhöhen.

Dies wird erfindungsgemäß durch ein Verfahren mit den Merkmalen des Anspruchs 1 gelöst.

Das Wesentliche der vorliegenden Erfindung besteht darin, dass die Dynamik, also die Beschleunigungsvorgänge und Drehraten bei der eigenhändigen Ausführung der Unterschrift oder Signatur, erfasst und einem späteren Erkennungs- oder Prüfungsverfahren oder Vergleichsverfahren mit weiteren Unterschriften zugrundegelegt werden. Es geht also nicht oder nicht nur darum, dass bei der eigenhändigen Ausführung einer Unterschrift oder Signatur eine Objektverfolgung, insbesondere referenziert auf die Spitze eines Schreibgeräts, durchgeführt wird, sondern es wird nach der vorliegenden Erfindung die Dynamik der Unterschrift erfasst, insbesondere rechnerisch ausgewertet und dem späteren Vergleich zugrundegelegt. Hiermit kann weitgehend ausgeschlossen werden, dass im Missbrauchsfall eine Unterschrift oder Signatur durch einen Dritten, nicht Berechtigten, nachvollzogen oder nachgezogen wird. Würde eine bloße Objektverfolgung durchgeführt werden, so wäre eine Unterscheidung der wirklichen von der reproduzierten nachgezogenen Unterschrift nicht möglich. Wenn aber nach der vorliegenden Erfindung die echte Dynamik, also die Beschleunigungs- und Verzögerungsvorgänge sowie Drehraten bei der Ausführung der Unterschrift, maßgeblich erfasst werden und hieraus zusätzliche Messgrößen errechnet und spezifische Merkmale aus diesen Messgrößen definiert und dem Vergleich zugrundegelegt werden, so kann die Sicherheit bei der Echtheitsprüfung einer Unterschrift oder Signatur wesentlich erhöht werden. Dies bildet den Kern der vorliegenden Erfindung.

Wesentlich hierfür ist, dass, obschon die eigenhändige Unterschrift auf einer Fläche, also einer vorzugsweise im wesentlichen ebenen 2-dimensionalen Unterlage ausgeführt wird, zur Erfassung der Unterschrift eine 3-dimensionale Inertialsensorik verwendet wird. Hierdurch kann dann erfindungsgemäß die volle Dynamik der Unterschrift oder Signatur erfasst werden.

Die 3-dimensionale Inertialsensorik umfasst Drehratensensoren und lineare Beschleunigungssensoren. Es kann auch zusätzlich ein Drucksensor in einer Spitze einer Eingabevorrichtung verwendet werden. Zur Stützung der Messdaten könnte auch ein Magnetfeldsensor zusätzlich eingesetzt werden, der eine Orientierung bezüglich der Richtung des Erdmagnetfelds oder eines der Vorrichtung bewusst überlagerten Magnetfelds gibt.

Es werden erfindungsgemäß die Inertialsensorsignale, also Beschleunigungsmesswerte und Messwerte von Drehratensensoren, und hieraus gewonnene Daten direkt berücksichtigt, gespeichert und für den Vergleich als Basismessgrößen herangezogen. Es können aber insbesondere zusätzlich durch Integration hieraus weitere zusätzliche Messgrößen, wie Geschwindigkeitswerte und/oder Positionswerte und -daten ermittelt, gespeichert und für den Vergleich herangezogen werden. Auch können Signale von Drehratensensoren und hieraus gewonnene Daten als Basismessgrößen direkt berücksichtigt, gespeichert und für den Vergleich herangezogen werden, sowie insbesondere zusätzlich durch Integration hieraus ermittelte Drehwinkel als weitere zusätzliche Messgrößen.

Wenn die vorstehend erwähnten zusätzlichen Messgrößen Geschwindigkeiten sind, so werden sie durch einfache Integration der Beschleunigungsmesswerte erhalten. Wenn die zusätzlichen Messgrößen Wegstrecken oder Positionswerte sind, so werden sie durch zweifache Integration der Beschleunigungsmesswerte erhalten. Wenn die zusätzlichen Messgrößen Winkel sind, so werden sie durch einfache Integration der Messwerte der Drehratensensoren erhalten.

Es erweist sich als vorteilhaft, wenn jede der Messgrößen durch eine Datenreihe mit i-Elementen repräsentiert wird, wobei sich i aus dem Produkt der Dauer der berücksichtigten Erfassung der Unterschrift, also die Dauer der Datennahme, und der Frequenz der Datennahme (Samplingfrequenz) ergibt.

Jede Messgröße einer Unterschrift oder Signatur, insbesondere in Form ihrer Datenreihe, könnte mit der ihr entsprechenden Messgröße und Datenreihe einer anderen Unterschrift oder Signatur direkt verglichen werden, um zu prüfen, ob die Unterschriften oder Signaturen übereinstimmen, also von derselben Person mit der dieser Person eigenen Beschleunigungs- und Verzögerungscharakteristik ausgeführt worden sind. Für diese Prüfung kann es sich aber auch als vorteilhaft erweisen, dass für jede Basismessgröße und vorzugsweise auch für jede weitere berechnete Messgröße, mehrere Merkmale ($b_i$) definiert werden, insbesondere

- Globales Minimum: kleinster aufgezeichneter Wert über die gesamte Dauer der Unterschrift;

- Position Minimum: Position des globalen Minimums als Offset in Sekunden, gemessen vom Beginn der Unterschrift;

- Globales Maximum: größter aufgezeichneter Wert über die gesamte Dauer der Unterschrift;

- Position Maximum: Position des globalen Maximums als Offset in Sekunden, gemessen vom Beginn der Unterschrift;

- Anzahl Nullstellen: Anzahl der Nullstellen vom Beginn bis zum Ende der Unterschrift;

- Distanz Nullstellen: der durchschnittliche Abstand in Sekunden aller aufeinander folgenden Nullstellen über die gesamte Dauer der Unterschrift in Sekunden;

- Anzahl Minima: Anzahl der lokalen Minima vom Beginn bis zum Ende der Unterschrift;

- Durchschnitt Minima: durchschnittlicher Wert aller lokalen Minima über die gesamte Dauer der Unterschrift;

- Anzahl Maxima: Anzahl der lokalen Maxima vom Beginn bis zum Ende der Unterschrift;

- Durchschnitt Maxima: durchschnittlicher Wert aller lokalen Maxima über die gesamte Dauer der Unterschrift;

- Durchschnitt positive Steigungen: Durchschnitt aller Steigungen mit einem positiven Wert in den Nullstellen zwischen Beginn und Ende der Unterschrift;

- Durchschnitt negative Steigungen: Durchschnitt aller Steigungen mit einem negativen Wert in den Nullstellen zwischen Beginn und Ende der Unterschrift;

- Länge der Unterschrift: Länge der Unterschrift in Sekunden vom Beginn bis zum Ende.

Dabei wird also der Verlauf des Messwerts einer Messgröße oder der Verlauf hieraus berechneter weiterer Messgrößen über die Dauer der Erfassung der Unterschrift oder Signatur untersucht, und es werden aus diesem Verlauf ein Merkmal oder mehrere Merkmale der vorstehend beispielhaft wiedergegebenen Art definiert.

Um den vorstehend genannten Vergleich von Unterschriften oder Signaturen ausführen zu können, werden die Merkmale ($b_i$) einer jeweiligen Messgröße (B) zu einem Vektor ($\hat{B}$) zusammengefasst, und zum Vergleich zweier Unterschriften oder Signaturen werden Vektoren der jeweiligen Messgrößen durch Anwendung eines Maßes miteinander verglichen.

Es erweist sich als vorteilhaft, wenn als Maß ein Ähnlichkeitsmaß verwendet wird, das als Abstands- oder Distanzmaß, insbesondere als Euklidische Distanz, definiert ist. Um entscheiden zu können, ob zwei betrachtete Messgrößen zweier Unterschriften oder Signaturen von derselben Person stammen, wird auf Basis der erzeugten Vektoren $\hat{B}$, $\hat{C}$ mit den jeweiligen Merkmalen $b_i$, $C_i$ und der Länge n der Vektoren (= Anzahl der Komponenten) deren Distanz unter Anwendung der Euklidischen Distanz berechnet.

$$dist(\hat{B},\hat{C}) = \sqrt{\sum_{i=1}^{n}(b_i - c_i)^2 / n}$$

Um die Distanz zweier Vektoren $\hat{B}$, $\hat{C}$ berechnen zu können, müssen deren Dimensionen übereinstimmen. Die Summe der quadratischen Abstände wird außerdem durch die Anzahl der Elemente n eines Vektors dividiert. Durch diese Normierung werden Distanzen untereinander vergleichbar, deren zugrundeliegende Vektorpaare unterschiedliche Längen, also unterschiedliche Anzahl von Komponenten, aufweisen.

Man könnte durchaus dieses Distanzmaß zweier Vektoren zum Vergleich von Unterschriften heranziehen. Es erweist sich indessen als vorteilhaft, dass nicht ein Distanzmaß, sondern ein Ähnlichkeitsmaß verwendet wird. Während im Falle der Distanz ein kleiner Wert einer hohen Übereinstimmung der Vektoren entspricht, entspricht im Falle der Anwendung eines Ähnlichkeitsmaßes ein kleiner Wert einer geringen Übereinstimmung. Ein einfacher Weg, ein Distanzmaß in ein Ähnlichkeitsmaß zu überführen, ist die Multiplikation mit -1:

$$s(\hat{B},\hat{C}) = -dist(\hat{B},\hat{C}).$$

Eine perfekte Übereinstimmung ergibt sich durch den Wert 0. Je kleiner der Wert ist, desto unterschiedlicher sind die beiden Vektoren und damit die Messgrößen, welche die Grundlage für die Berechnung dieser Vektoren bilden.

Es zeigt sich, dass manche Merkmale bei der Repräsentation von Unterschriften oder Signaturen eine höhere Aussagekraft haben als andere. So hat z. B. die Anzahl der Nullstellen oder die Länge der Unterschrift eine höhere Aussagekraft als der durchschnittliche Wert aller positiven Steigungen. Für die Qualität der Unterschriftenerkennung ist es somit vorteilhaft, stark aussagekräftige Merkmale in stärkerem Maße beim Vergleich von Vektoren zu berücksichtigen als weniger aussagekräftige. Um dies zu erreichen, können einzelne Merkmale stärker gewichtet werden als andere. Hierfür können in vorteilhafter Weise folgende Maßnahmen ergriffen werden:

- die Skalierung eines Merkmals $b_i$ durch Multiplikation mit einer Konstante $C_R$;

- die Umrechnung des Merkmals $b_i$ in einen Prozentwert, bezogen auf einen konstanten Wert $p_r$, der 100 % entspricht.

Es erweist sich des Weiteren als besonders vorteilhaft, wenn Beginn und Ende der eigenhändig ausgeführten Unterschrift oder Signatur bei der Erfassung ermittelt werden. Damit kann verhindert werden, dass Bewegungen während der tatsächlichen Aufzeichnungsdauer, die aber nicht von der tatsächlichen Unterschrift oder Signatur stammen, in den Vergleich, insbesondere in die Berechnung von Merkmalen, einfließen und das Ergebnis verfälschen.

Als besonders vorteilhaft hat es sich erwiesen, dass Beginn und Ende der Unterschrift oder Signatur anhand der Steigung in den Nullstellen der Sensormesswerte festgestellt werden, indem diejenige Nullstelle, deren Steigung einen vordefinierten Wert übertrifft, als Beginn der Unterschrift oder Signatur gewertet wird. Eine Unterschrift beginnt also an einer Nullstelle, deren Steigung als erste einen vordefinierten Wert übertrifft, was durch eine Schwellwertprüfung festgestellt werden kann. Eine Unterschrift endet an derjenigen Nullstelle, deren Steigung als letzte denselben vordefinierten Wert übertrifft.

Die Erfindung betrifft auch eine Vorrichtung zur Durchführung des erfindungsgemäßen Verfahrens, und zwar sowohl eine Vorrichtung zum Erfassen einer ursprünglich "echten" eigenhändig ausgeführten Unterschrift oder Signatur und weiterer zu prüfender Unterschriften oder Signaturen, als auch eine Vorrichtung, mittels derer diese Prüfung durchführbar ist. Die erfindungsgemäße Vorrichtung erfasst eine Eingabevorrichtung, die sich von Hand führen lässt und die insbesondere in Form eines Stifts oder Schreibgeräts ausgebildet sein kann. Diese Eingabevorrichtung umfasst dann die 3-dimensionale Inertialsensorik. Sie kann zusätzlich Auswertemittel zur Verarbeitung von Messwerten der Inertialsensorik erfassen und Speichermittel. Es wäre aber auch denkbar, dass die Vorrichtung, insbesondere die Eingabevorrichtung, eine Schnittstelle zur Datenkommunikation mit einem externen Rechenmittel und/oder Speichermittel und/oder einem Anzeigemittel umfasst.

Die Vorrichtung umfasst weiter Mittel zum Vergleichen der Messwerte oder Daten verschiedener eigenhändig ausgeführter Unterschriften oder Signaturen. Wenn - wie vorausgehend beschrieben - aus Messwerten oder Daten bestimmter Messgrößen Merkmale definiert und bestimmt werden, anhand derer dann der Vergleich durchgeführt werden soll, so umfasst die beanspruchte Vorrichtung auch Mittel zur Berechnung solcher Merkmale der jeweiligen Messgrößen.

Die Erfindung betrifft des weiteren die Verwendung einer 3-dimensionalen Inertialsensorik zur Erfassung und/oder Erkennung einer auf einer im wesentlichen 2-dimensionalen Fläche eigenhändig ausgeführten Unterschrift oder Signatur im weitesten Sinn, indem die Dynamik (Beschleunigung, Drehrate) einer eigenhändig ausgeführten Unterschrift oder Signatur erfasst und bei der Erkennung oder dem Vergleich mit anderen Unterschriften oder Signaturen berücksichtigt wird.

Weitere Merkmale, Einzelheiten und Vorteile der Erfindung ergeben sich aus den beigefügten Patentansprüchen und aus der zeichnerischen Darstellung einer bevorzugten Ausführungsform der Erfindung. In der Zeichnung zeigt:

Figur 1     ein Flussdiagramm, welches die Schritte beim Erfassen und Vergleichen von Unterschriften oder Signaturen verdeutlicht;

Figur 2     eine Vorrichtung in Form eines Schreibgeräts.

Das erfindungsgemäße Verfahren dient zur Realisierung einer referenzlosen Unterschriftenerkennung. Die zu überprüfende Unterschrift oder Signatur muss also nicht auf einem "tablet" oder "pad" geleistet werden oder auf einem besonderen barcodeartigen Vordruck, sondern sie kann auf jeder prinzipiell beliebigen Fläche ausgeführt werden. Unter Anwendung dieses Verfahrens wird es möglich, eine Unterschrift, die üblicherweise aus zwei bis drei Worten besteht, zu erfassen. Der Vorgang des Unterschreibens dauert erfahrungsgemäß 1 bis maximal 10 sek. In diesem Zeitraum spielt die Drift von Inertialsensoren noch eine untergeordnete Rolle. Unter dieser Voraussetzung ist es möglich, eine biometrisch sichere Unterschriftenerkennung unter Beibehaltung des Vorteils einer referenzlosen Datenerfassung zu schaffen. Die Unterschrift kann dabei auf jeder beliebigen Schreibfläche geleistet werden.

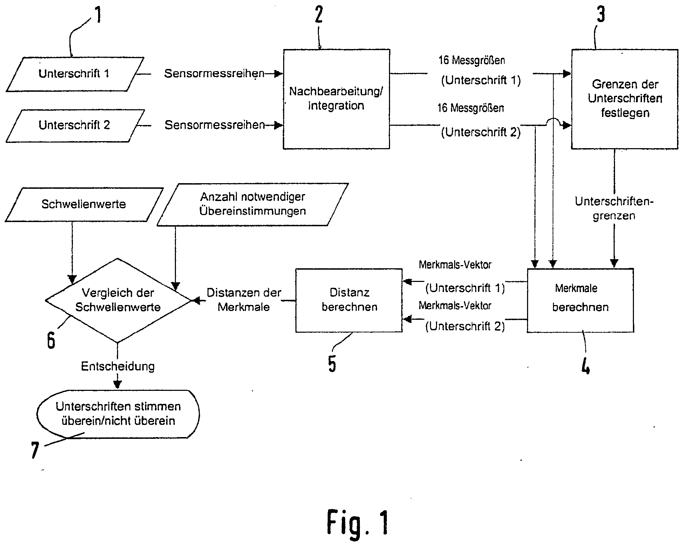

Figur 1 zeigt die Reihenfolge der hierfür nach einer Ausführungsform der Erfindung auszuführenden Verfahrensschritte. Es werden zwei miteinander zu vergleichende Unterschriften auf einer Schreibfläche eigenhändig vollzogen und dabei erfasst. Dieser Vorgang des Erfassens ist vorliegend für die Unterschrift 1 und 2 quasi nebeneinander dargestellt. Üblicherweise finden diese Vorgänge aber zeitlich und räumlich voneinander getrennt statt. Insbesondere wird ein Berechtigter seine eigenhändige Unterschrift zum Zwecke der dauerhaften Speicherung einmal leisten; die Unterschrift wird dabei in der nachfolgend beschriebenen Weise erfasst und in an sich beliebiger Weise und an beliebigem Ort als ein biometrisches Datum, Kennzeichen oder Individualisierungsmerkmal hinterlegt. Zweck der Unterschriftenerkennung ist es nun, dass die Unterschrift, wenn sie zu einem späteren Zeitpunkt an einem anderen Ort geleistet wird, auf ihre Echtheit, d. h. daraufhin überprüft werden kann, ob sie von derselben autorisierten Person stammt oder von einem nicht berechtigten Dritten zu Täuschungszwecken nachvollzogen wurde.

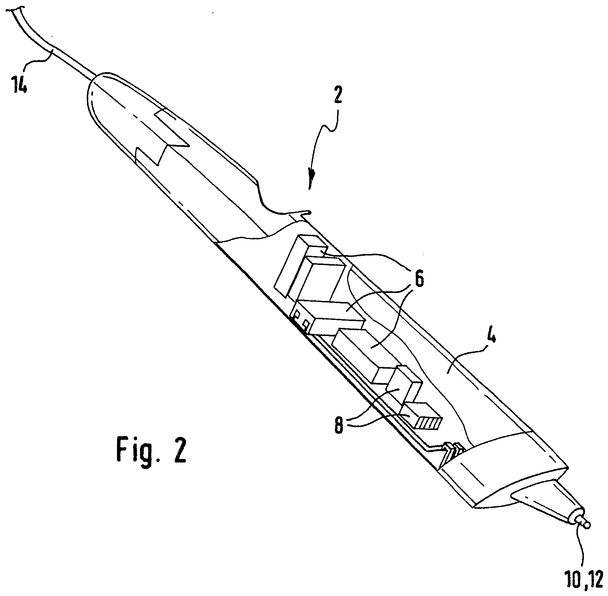

Jedenfalls werden die miteinander zu vergleichenden Unterschriften 1 und 2 in einem Verfahrensschritt 1 (s. Figur 1) eigenhändig auf einer Schreibfläche ausgeführt und dabei unter Verwendung 3-dimensionaler Inertialsensorik erfasst. Die hierbei zu verwendende erfindungsgemäße Vorrichtung 2 ist in der Form eines Schreibgeräts 4, insbesondere Schreibstifts, ausgebildet, welcher die 3-dimensionale Inertialsensorik trägt und schematisch in Figur 2 dargestellt ist. Vorzugsweise werden drei entlang der Raumrichtungen in einem vorbestimmten Winkel von vorzugsweise 90° zueinander orientierte Beschleunigungssensoren 6 und drei Drehratensensoren 8 verwendet. In dem vorstehend beschriebenen Ausführungsbeispiel wird noch ein Kraftsensor 10 an der Schreibstiftspitze 12 der Erfassungsvorrichtung 2 verwendet. Es sind also insgesamt sieben Sensoren (sechs Inertialsensoren und ein Kraft- oder Drucksensor) vorgesehen, die während der Ausführung der Unterschrift Messwerte in einer vorbestimmten Samplingfrequenz von ca. 0,3 kHz bis 3 kHz aufzeichnen, die dann in einem Speichermittel in Form einer Datenreihe gespeichert werden. Hierfür weist das beispielhaft dargestellte Schreibgerät 4 eine Datenleitung 14 als Schnittstelle zu einem Rechner auf, mittels derer Messwerte und -daten an den Rechner gegeben werden. Die Datenleitung ist bidirektional nutzbar.

Die Beschleunigungsmessdaten und Messwerte von Drehratensensoren bilden sechs sogenannte Basismessgrößen. Aus diesen Messwerten werden in einem Schritt 2 zusätzlich weitere neun Messgrößen rechnerisch ermittelt, und zwar drei Geschwindigkeitsmesswerte durch einfache Integration der drei Beschleunigungsmesswerte, und drei Positionswerte durch zweifache Integration der Beschleunigungsmesswerte und drei Drehwinkel durch einfache Integration der Messwerte der Drehratensensoren. Ferner liefert der Kraft- oder Drucksensor eine weitere Messgröße. Es ergeben sich also insgesamt sechzehn Messgrößen, die für den Vergleich der Unterschriften oder Signaturen herangezogen werden.

Anhand dieser im beispielhaft dargestellten Fall sechzehn Messgrößen (sieben Basismessgrößen + neun hieraus gewonnene zusätzliche Messgrößen) werden im Schritt 3 die Unterschriftengrenzen, also der Beginn und das Ende der eigenhändig vollzogenen Unterschrift oder Signatur, ermittelt. Dadurch wird verhindert, dass Bewegungen während der gesamten Datenaufzeichnungsdauer, die nicht von der Unterschrift stammen, in die Auswertung einfließen und das Ergebnis verfälschen. Die Ermittlung von Beginn und Ende einer eigenhändig vollzogenen Unterschrift erfolgt über die Steigung in den Nullstellen. Eine Unterschrift beginnt an derjenigen Nullstelle, deren Steigung als erste einen vordefinierten Wert übertrifft. Eine Unterschrift endet an derjenigen Nullstelle, deren Steigung als letzte denselben vordefinierten Wert übertrifft.

Hiernach werden im Schritt 4 vorzugsweise zu jeder der sechzehn Messgrößen unter Verwendung der jeweiligen Datenreihen der Messgrößen Merkmale definiert bzw. vordefinierte Merkmale ermittelt. Als Ergebnis dieser Ermittlung wird vorzugsweise zu jeder Messgröße ein Merkmalsvektor $\hat{B}$ gebildet, dessen Komponenten die jeweiligen Merkmale $b_i$ beinhalten. Nach einer bevorzugten Ausführungsform des erfindungsgemäßen Verfahrens werden die folgenden Merkmale definiert und vorzugsweise für jede Messgröße errechnet und als Merkmalsvektor hinterlegt, der dann für die weitere Verarbeitung zur Verfügung steht und vorzugsweise gespeichert wird:

-    Globales Minimum: kleinster aufgezeichneter Wert über die gesamte Dauer der Unterschrift;

- Position Minimum: Position des globalen Minimums als Offset in Sekunden, gemessen vom Beginn der Unterschrift;

- Globales Maximum: größter aufgezeichneter Wert über die gesamte Dauer der Unterschrift;

- Position Maximum: Position des globalen Maximums als Offset in Sekunden, gemessen vom Beginn der Unterschrift;

- Anzahl Nullstellen: Anzahl der Nullstellen vom Beginn bis zum Ende der Unterschrift;

- Distanz Nullstellen: der durchschnittliche Abstand in Sekunden aller aufeinander folgenden Nullstellen über die gesamte Dauer der Unterschrift in Sekunden;

- Anzahl Minima: Anzahl der lokalen Minima vom Beginn bis zum Ende der Unterschrift;

- Durchschnitt Minima: durchschnittlicher Wert aller lokalen Minima über die gesamte Dauer der Unterschrift;

- Anzahl Maxima: Anzahl der lokalen Maxima vom Beginn bis zum Ende der Unterschrift;

- Durchschnitt Maxima: durchschnittlicher Wert aller lokalen Maxima über die gesamte Dauer der Unterschrift;

- Durchschnitt positive Steigungen: Durchschnitt aller Steigungen mit einem positiven Wert in den Nullstellen zwischen Beginn und Ende der Unterschrift;

- Durchschnitt negative Steigungen: Durchschnitt aller Steigungen mit einem negativen Wert in den Nullstellen zwischen Beginn und Ende der Unterschrift;

- Länge der Unterschrift: Länge der Unterschrift in Sekunden vom Beginn bis zum Ende.

Für die Berechnung der einzelnen Merkmale $b_i$ und der Bildung der Merkmalsvektoren $\hat{B}$ werden nur diejenigen Messwerte oder Messdaten der Basismessgrößen und der zusätzlichen Messgrößen herangezogen, die zwischen Beginn und Ende der eigenhändig vollzogenen Unterschrift oder Signatur ermittelt wurden, also nicht sämtliche Messwerte und Daten während der gesamten Aufzeichnungsdauer.

In einem weiteren Verfahrensschritt 5 werden die Merkmalsvektoren mit Hilfe eines Maßes, bei dem es sich im beispielhaft dargestellten Fall um ein Ähnlichkeitsmaß handelt, verglichen. Hierfür wird im Schritt 5 zunächst ein Distanzmaß in Form der Euklidischen Distanz zweier Merkmalsvektoren $\hat{B}$ und $\hat{C}$, die sich auf dieselbe Messgröße beziehen, jedoch zu verschiedenen Unterschriften 1 und 2 gehören, berechnet. Dabei wird die Summe der quadratischen Abstände gebildet und durch die Anzahl der Elemente n der Vektoren dividiert. Durch diese Normierung werden Distanzen untereinander vergleichbar, deren zugrundeliegende Vektorpaare unterschiedliche Längen aufweisen.

Es hat sich jedoch als vorteilhaft erwiesen, nicht die Distanz zweier Merkmalsvektoren für einen Vergleich, insbesondere einen Schwellenwertvergleich, heranzuziehen, sondern ein hieraus gebildetes Ähnlichkeitsmaß $s(\hat{B},\hat{C})$.

$$s(\hat{B},\hat{C}) = -dist(\hat{B},\hat{C}).$$

$$dist(\hat{B},\hat{C}) = \sqrt{\sum_{i=1}^{n}(b_i - c_i)^2 / n}$$

Eine perfekte Übereinstimmung wird durch den Wert 0 für $s(\hat{B},\hat{C})$ repräsentiert. Je kleiner der Wert $s(\hat{B},\hat{C})$ desto unterschiedlicher sind die beiden biometrischen Merkmale.

Es hat sich gezeigt, dass manche Merkmale bei der Erkennung bzw. dem Vergleich von eigenhändig vollzogenen Unterschriften oder Signaturen eine höhere Aussagekraft haben als andere. Solche Merkmale werden daher in vorteilhafter Weise stärker gewichtet, und zwar durch Skalierung des betreffenden Merkmals $b_i$ durch Multiplikation mit einer Konstante $C_R$ oder durch Umrechnung des Merkmals $b_i$ in einen Prozentwert, bezogen auf einen konstanten Wert $p_r$, der 100 % entspricht.

Das Ergebnis im Schritt 5 ist vorliegend ein modifiziertes Distanzmaß der Merkmalsvektoren, wobei vorzugsweise für alle Messgrößen Merkmalsvektoren bestimmt werden und aus einem jeweiligen Vektorpaar das modifizierte Distanzmaß ermittelt wurde. Im Schritt 6 wird anhand der Distanzen ermittelt, in wie vielen Messgrößen die Unterschriften 1 und 2 übereinstimmen, indem eine jeweilige Distanz der Vektorpaare einem Schwellenwertvergleich unterzogen wird. Es wird dann die Anzahl der Übereinstimmungen der Messgrößen ermittelt und mit einer vorgebbaren notwendigen Anzahl von Übereinstimmungen verglichen. In Abhängigkeit dieses Vergleichs wird entschieden, ob die Unterschriften übereinstimmen oder nicht. Dies wird in einem Schritt 7, insbesondere visuell, angezeigt. In Abhängigkeit hiervon kann dann in an sich beliebiger Weise eine Berechtigung zuerkannt oder verweigert werden.

**Patentansprüche**

1. Verfahren zum Erfassen einer eigenhändig ausgeführten Unterschrift oder Signatur im weitesten Sinn und zum Beurteilen der Echtheit durch Vergleich mit zuvor erfassten Messwerten und hieraus gewonnenen und gespeicherten Daten, indem eine auf einer Fläche eigenhändig ausgeführte Unterschrift oder Signatur mittels dreidimensionaler Inertialsensorik, die wenigstens einen Drehratensensor, und wenigstens einen Beschleunigungssensor umfasst, erfasst wird, und hierbei ermittelte Beschleunigungsmesswerte und Messwerte des Drehratensensors oder hieraus gewonnene Daten gespeichert und weiterer Datenverarbeitung zugeführt werden, wobei die gespeicherten und weiterverarbeiteten Messdaten die Grundlage für den Vergleich mit weiteren eigenhändig vollzogenen Unterschriften oder Signaturen bilden, die hierfür ebenfalls erfasst werden, wobei aus Messwerten der Inertialsensorik, die als Basismessgrößen die Grundlage für den Vergleich mit weiteren eigenhändig vollzogenen Unterschriften oder Signaturen bilden, zusätzliche Messgrößen berechnet werden und dass für jede Messgröße eines oder mehrere Merkmale definiert werden und dass die Merkmale einer jeweiligen Messgröße zu einem Vektor zusammengefasst werden und dass zum Vergleich zweier Unterschriften oder Signaturen Vektoren der jeweiligen Messgrößen durch Anwendung eines Maßes miteinander verglichen werden, **dadurch gekennzeichnet, dass** als Merkmale eines oder mehrere der folgenden ermittelt werden:

- Position Minimum: Position des globalen Minimums als Offset in Sekunden, gemessen vom Beginn der Unterschrift;
- Position Maximum: Position des globalen Maximums als Offset in Sekunden, gemessen vom Beginn der Unterschrift;
- Distanz Nullstellen: der durchschnittliche Abstand in Sekunden aller aufeinander folgenden Nullstellen über die gesamte Dauer der Unterschrift in Sekunden;
- Durchschnitt Minima: durchschnittlicher Wert aller lokalen Minima über die gesamte Dauer der Unterschrift;
- Durchschnitt Maxima: durchschnittlicher Wert aller lokalen Maxima über die gesamte Dauer der Unterschrift;
- Durchschnitt positive Steigungen: Durchschnitt aller Steigungen mit einem positiven Wert in den Nullstellen zwischen Beginn und Ende der Unterschrift;
- Durchschnitt negative Steigungen: Durchschnitt aller Steigungen mit einem negativen Wert in den Nullstellen zwischen Beginn und Ende der Unterschrift.

2. Verfahren nach Anspruch 1, **dadurch gekennzeichnet, dass** als Merkmale (bi) ferner eines oder mehrere der folgenden definiert werden:

- Globales Minimum: kleinster aufgezeichneter Wert über die gesamte Dauer der Unterschrift;
- Globales Maximum: größter aufgezeichneter Wert über die gesamte Dauer der Unterschrift;
- Anzahl Nullstellen: Anzahl der Nullstellen vom Beginn bis zum Ende der Unterschrift;
- Anzahl Minima: Anzahl der lokalen Minima vom Beginn bis zum Ende der Unterschrift;
- Anzahl Maxima: Anzahl der lokalen Maxima vom Beginn bis zum Ende der Unterschrift;
- Länge der Unterschrift: Länge der Unterschrift in Sekunden vom Beginn bis zum Ende;
- die durch Integration der Messrate von Drehratensensoren erhaltenen Drehwinkel.

3. Verfahren nach Anspruch 1, **dadurch gekennzeichnet, dass** die Inertialsensorik zusätzlich wenigstens einen Magnetfeldsensor umfasst.

4. Verfahren nach Anspruch 1, 2 oder 3, **dadurch gekennzeichnet, dass** die zusätzlichen Messgrößen Geschwindigkeiten sind, die durch einfache Integration der Beschleunigungsmesswerte erhalten werden.

5. Verfahren nach Anspruch 1, 2 oder 3, **dadurch gekennzeichnet, dass** die zusätzlichen Messgrößen zurückgelegte Wegstrecken sind, die durch zweifache Integration der Beschleunigungsmesswerte erhalten werden.

6. Verfahren nach einem der vorstehenden Ansprüche, **dadurch gekennzeichnet, dass** jede der Messgrößen durch eine Datenreihe mit i Elementen repräsentiert wird, wobei sich i aus dem Produkt der Dauer der Erfassung und der Frequenz der Datennahme ergibt.

7. Verfahren nach einem der vorstehenden Ansprüche, **dadurch gekennzeichnet, dass** als Maß die euklidische Distanz verwendet wird.

8. Verfahren nach Anspruch 7, **dadurch gekennzeichnet, dass** als Maß ein Ähnlichkeitsmaß verwendet wird, das durch Multiplikation mit dem euklidischen Maß definiert ist.

9. Verfahren nach einem der vorstehenden Ansprüche, **dadurch gekennzeichnet, dass** Merkmale eines Vektors für die Durchführung des Vergleichs unterschiedlich gewichtet werden.

10. Verfahren nach einem der vorstehenden Ansprüche, **dadurch gekennzeichnet, dass** der Beginn und das Ende der eigenhändig ausgeführten Unterschrift oder Signatur ermittelt wird.

11. Verfahren nach Anspruch 10, **dadurch gekenn-**

**zeichnet, dass** Beginn und Ende anhand der Steigung in den Nullstellen festgestellt wird, indem diejenige Nullstelle, deren Steigung einen vordefinierten Wert übertrifft, als Beginn der Unterschrift oder Signatur gewertet wird.

12. Verfahren nach Anspruch 10 oder 11, **dadurch gekennzeichnet, dass** für die Berechnung der einzelnen Merkmale nur diejenigen Sensordaten zwischen Beginn und Ende der eigenhändig ausgeführten Unterschrift oder Signatur herangezogen werden.

13. Vorrichtung (2) zum Erfassen einer eigenhändig ausgeführten Unterschrift oder Signatur im weitesten Sinn und zum Beurteilen der Echtheit durch Vergleich mit zuvor erfassten Messwerten und hieraus gewonnenen und gespeicherten Daten, aufweisend:

Eine Eingabevorrichtung mit einer dreidimensionalen Inertialsensorik, die wenigstens einen Drehratensensor und wenigstens einen Beschleunigungssensor umfasst, um eine auf einer Fläche eigenhändig ausgeführte Unterschrift oder Signatur zu erfassen und hierbei ermittelte Beschleunigungsmesswerte und Messwerte des Drehratensensors oder hieraus gewonnene Daten zu speichern und weiterer Datenverarbeitung zuzuführen, wobei die gespeicherten und weiterverarbeiteten Messdaten die Grundlage für den Vergleich mit weiteren eigenhändig vollzogenen Unterschriften oder Signaturen bilden, die hierfür ebenfalls erfasst werden, ferner aufweisend

Mittel, um aus Messwerten der Inertialsensorik, die als Basismcssgrößen die Grundlage für den Vergleich mit weiteren eigenhändig vollzogenen Unterschriften oder Signaturen bilden, zusätzliche Messgrößen zu berechnen werden und für jede Messgröße eines oder mehrere Merkmale zu definieren, um ferner die Merkmale einer jeweiligen Messgröße zu einem Vektor zusammenzufassen und zum Vergleich zweier Unterschriften oder Signaturen Vektoren der jeweiligen Messgrößen durch Anwendung eines Maßes miteinander zu vergleichen, wobei als Merkmale eines oder mehrere der folgenden ermittelt werden:

- Position Minimum: Position des globalen Minimums als Offset in Sekunden, gemessen vom Beginn der Unterschrift;
- Position Maximum: Position des globalen Maximums als Offset in Sekunden, gemessen vom Beginn der Unterschrift;
- Distanz Nullstellen: der durchschnittliche Abstand in Sekunden aller aufeinander folgenden Nullstellen über die gesamte Dauer der Unterschrift in Sekunden;

- Durchschnitt Minima: durchschnittlicher Wert aller lokalen Minima über die gesamte Dauer der Unterschrift;
- Durchschnitt Maxima: durchschnittlicher Wert aller lokalen Maxima über die gesamte Dauer der Unterschrift;
- Durchschnitt positive Steigungen: Durchschnitt aller Steigungen mit einem positiven Wert in den Nullstellen zwischen Beginn und Ende der Unterschrift;
- Durchschnitt negative Steigungen: Durchschnitt aller Steigungen mit einem negativen Wert in den Nullstellen zwischen Beginn und Ende der Unterschrift.

14. Vorrichtung nach Anspruch 13, **dadurch gekennzeichnet, dass** die Eingabevorrichtung stitförmig ausgebildet ist.

15. Vorrichtung nach Anspruch 13, **dadurch gekennzeichnet, dass** die Eingabevorrichtung als Schreibgerät (4) ausgebildet ist.

16. Vorrichtung nach einem der Ansprüche 13-15, **dadurch gekennzeichnet, dass** die Vorrichtung (2) eine Schnittstelle (14) zur Datenkommunikation mit einem externen Rechenmittel und/oder Speichermittel und/oder einem Anzeigemittel umfasst.

**Claims**

1. Method for registering a handwritten personal signature in the broadest sense and for judging its authenticity by comparison with previously registered measured values and data derived therefrom and stored, by registering a signature handwritten on a surface by means of a three-dimensional inertial sensing system comprising at least one rate-of-rotation sensors and at least one acceleration sensor, and by storing in memory and forwarding for further data processing measured acceleration values and values measured by the rate-of-rotation sensor thereby determined or data derived therefrom, the measured data stored in memory and/or processed forming the basis for comparison with other handwritten signatures which have also been registered for this purpose, wherein supplementary measured variables are calculated from values measured by the inertial sensor system which, as basic measured variables, form the basis for the comparison with other handwritten signatures and in that several characteristics are defined for each measured variable and in that the characteristics of each measured variable are combined as a vector and in that for the comparison of two signatures, vectors of the respective measured variables are compared with each other by applying a yardstick, **characterized in that** as characteristics one or more of the following is determined:

    - Position of minimum: position of overall minimum as offset in seconds, measured from the start of the signature;
    - Position of maximum: position of overall maximum as offset in seconds, measured from the start of the signature;
    - Distance of zero points: the average interval in seconds between all successive zero points over the total duration of the signature in seconds;
    - Average minimum: average value of all local minima over the total duration of the signature;
    - Average maximum: average value of all local maxima over the total duration of the signature;
    - Average positive slope: average of all slopes with a positive value at the zero points between start and end of the signature;
    - Average negative slope: average of all slopes with a negative value at the zero points between start and end of the signature.

2. The method of claim 1, **characterized in that** as characteristics (bi) further one or more of the following is defined:

    - Overall minimum: smallest value recorded over the total duration of the signature;
    - Overall maximum: largest value recorded over the total duration of the signature;
    - Number of zero points: number of zero points from the start to the end of the signature;
    - Number of minima: number of local minima from the start to the end of the signature;
    - Number of maxima: number of local maxima from the start to the end of the signature;
    - Length of signature: length of the signature in seconds from start to end.

3. Method according to Claim 1, **characterized in that** the inertial sensing system additionally comprises at least one magnetic field sensor.

4. Method according to Claims 1, 2 or 3, **characterized in that** the supplementary measured variables are velocities obtained by single integration of the measured acceleration values.

5. Method according to Claims 1, 2 or 3, **characterized in that** the supplementary measured variables are traversed distances obtained by double integration of the measured acceleration values.

6. Method according to any one of the preceding claims, **characterized in that** each of the measured variables is represented by a data stream with i elements, i being the product of the duration of data acquisition and the data sampling frequency

7. Method according to any one of the preceding claims, **characterized in that** the Euclidian distance is used as the yardstick.

8. Method according to Claim 7, **characterized in that** a measure of similarity, defined by a multiplication of the Euclidian measure, is used as the yardstick.

9. Method according to any one of the preceding claims, **characterized in that** characteristics of a vector are weighted differently for the execution of the comparison.

10. Method according to any one of the preceding claims, **characterized in that** the start and end of the handwritten signature are determined.

11. Method according to Claim 10, **characterized in that** the start and end are established by reference to the slope at the zero points, by identifying the zero point whose slope exceeds a pre-defined value as the start of the signature.

12. Method according to Claim 10 or Claim 11, **characterized in that** only the sensor data between the start and end of the handwritten signature are adopted for the calculation of the individual characteristics.

13. Apparatus (2) for for registering a handwritten personal signature in the broadest sense and for judging its authenticity by comparison with previously registered measured values and data derived therefrom, comprising:

    input means for registering a signature handwritten on a surface by means of a three-dimensional inertial sensing system comprising at least one rate-of-rotation sensors and at least one acceleration sensor, and for storing in memory and forwarding for further data processing measured acceleration values and values measured by the rate-of-rotation sensor thereby determined or data derived therefrom, the measured data stored in memory and/or processed forming the basis for comparison with other handwritten signatures which have also been registered for this purpose, further comprising means for calculating supplementary measured variables from values measured by the inertial sensor system which, as basic measured variables, form the basis for the comparison with other handwritten signatures and for defining several characteristics for each measured variable wherein the characteristics of each measured variable are combined as a vector and for the comparison of two signatures, vectors of the respective measured variables are compared with each other by applying a yardstick, wherein as characteristics one or more of the following is determined:

- Position of minimum: position of overall minimum as offset in seconds, measured from the start of the signature;
- Position of maximum: position of overall maximum as offset in seconds, measured from the start of the signature;
- Distance of zero points: the average interval in seconds between all successive zero points over the total duration of the signature in seconds;
- Average minimum: average value of all local minima over the total duration of the signature;
- Average maximum: average value of all local maxima over the total duration of the signature;
- Average positive slope: average of all slopes with a positive value at the zero points between start and end of the signature;
- Average negative slope: average of all slopes with a negative value at the zero points between start and end of the signature.

14. Device according to Claim 14, **characterized in that** the input device, is constructed in the form of a pen.

15. Device according to Claim 13, **characterized in that** the input device, is constructed as a writing implement (4).

16. Device according to any one of Claims 13-15, **characterized in that** the device (2), comprises an interface (14) for communicating data to an external computing device and/or memory device and/or display device.

**Revendications**

1. Procédé permettant la détection d'une signature effectuée à la main ou d'une signature au sens le plus large et de juger de l'authenticité par rapport à des valeurs de mesures détectées précédemment et obtenues à partir de données acquises et mémorisées, au moyen d'une signature exécutée à la main sur une surface ou d'une signature réalisée au moyen de capteur inertiel à trois dimensions, qui est détectée par au moins un capteur de vitesse de rotation et qui comprend au moins un accéléromètre, et ainsi les valeurs de vitesse et les valeurs du capteur de vitesse de rotation déterminées ou des données acquises de celles-ci sont enregistrées et d'autres traitements de données sont fournis, les données de mesures enregistrées et traitées constituant la base pour la comparaison avec d'autres signatures réalisées à la main ou d'autres formes de signatures également détectées, dans lequel procédé, à partir des valeurs de mesures des capteurs inertiels, il est constitué la base qui formera la base de comparaison avec d'autres signatures réalisées à la main ou d'autres formes de signatures, des valeurs de mesure supplémentaires étant calculées et définissant pour chaque valeur de mesure une ou plusieurs caractéristiques, les caractéristiques d'une valeur de mesure correspondant à un vecteur étant combinées, et pour la comparaison de deux signatures, les vecteurs des valeurs de mesures respectives sont comparés les uns aux autres par application d'une mesure, **caractérisé en ce qu'**on définit à titre de caractéristique un ou plusieurs des éléments suivants :

- Position minimum : position du minimum global en un décalage en secondes, mesurée à partir du début de la signature ;
- Position maximum : position du maximum global en un décalage en secondes, mesurée à partir du début de la signature ;
- Distance des points zéro : l'intervalle moyen en secondes entre chaque point zéro successif pendant toute la durée de la signature en secondes ;
- Moyenne des minima : valeur moyenne de tous les minima locaux pendant toute la durée de la signature ;
- Moyenne des maxima : valeur moyenne de tous les maxima locaux pendant toute la durée de la signature ;
- Moyenne des pentes positives : moyenne de toutes les pentes ayant une valeur positive aux points zéro entre le début et la fin de la signature ;
- Moyenne des pentes négatives : moyenne de toutes les pentes ayant une valeur négative aux points zéro entre le début et la fin de la signature.

2. Procédé selon la revendication 1, **caractérisé en ce qu'**on définit également à titre de caractéristiques (bi) un ou plusieurs des éléments suivants

- Minimum global : la plus petite valeur enregistrée pendant toute la durée de la signature ;
- Maximal global : la plus grande valeur enregistrée pendant toute la durée de la signature ;
- Nombre de points zéro : nombre de points zéro entre le début et la fin de la signature ;
- Nombre de minima : nombre de minima locaux entre le début et la fin de la signature ;

- Nombre de maxima : Nombre de maxima locaux entre le début et la fin de la signature ;
- Longueur de la signature : la longueur de la signature en secondes du début à la fin ;
- l'angle de rotation obtenu par l'intégration de la fréquence de mesure des capteurs de vitesse de rotation.

**3.** Procédé selon la revendication 1, **caractérisé en ce que** le système de capteurs inertiels comprend en outre au moins un capteur de champ magnétique.

**4.** Procédé selon la revendication 1,2 ou 3, **caractérisé en ce que** des valeurs mesurées supplémentaires correspondent à des vitesses qui sont obtenues par simple intégration des mesures d'accélération.

**5.** Procédé selon la revendication 1, 2 ou 3, **caractérisé en ce que** des valeurs mesurées supplémentaires correspondent à des distances parcourues et qui sont obtenues par une double intégration des mesures d'accélération.

**6.** Procédé selon l'une quelconque des revendications précédentes, **caractérisé en ce que** chacune des valeurs mesurées est représentée par une série de données avec i éléments, i étant obtenu par le produit de la durée de la détection et de la fréquence de l'acquisition des données.

**7.** Procédé selon l'une quelconque des revendications précédentes, **caractérisé en ce que** la distance euclidienne est utilisée en tant que mesure.

**8.** Procédé selon la revendication 7, **caractérisé en ce qu'**une mesure de similarité est utilisée comme une mesure qui est définie en multipliant par la mesure euclidienne.

**9.** Procédé selon l'une quelconque des revendications précédentes, **caractérisé en ce que** les caractéristiques d'un vecteur sont pondérées différemment pour la mise en oeuvre de la comparaison.

**10.** Procédé selon l'une quelconque des revendications précédentes, **caractérisé en ce que** le début et la fin de la signature réalisée à la main ou de l'autre forme de signature sont déterminés.

**11.** Procédé selon la revendication 10, **caractérisé en ce que** le début et la fin sont déterminés à partir de la pente aux points zéro, **en ce qu'**en un point zéro, la pente est supérieure à une valeur prédéfinie évaluée comme étant le début de la signature manuscrite ou de l'autre forme de signature.

**12.** Procédé selon la revendication 10 ou la revendication 11, **caractérisé en ce que**, pour le calcul des caractéristiques individuelles, seules sont utilisées les données des capteurs entre le début et la fin de la signature manuscrite ou de l'autre forme de signature.

**13.** Dispositif (2) permettant la détection d'une signature effectuée à la main ou d'une signature dans le sens le plus large et permettant de juger de l'authenticité par rapport à des valeurs de mesures détectées précédemment et des données acquises et enregistrées, comprenant :

Un dispositif d'entrée ayant un système de capteur inertiel à trois dimensions, comprenant au moins un capteur de vitesse de rotation et au moins un accéléromètre pour détecter une signature manuscrite ou une signature sur une surface et ainsi enregistrer les valeurs du capteur de vitesse et les valeurs du capteur de vitesse de rotation ou des données déterminées ou acquises de celles-ci et alimenter d'autres traitements de données, dans lequel les données de mesures enregistrées et traitées forment la base de la comparaison avec d'autres signatures manuscrites ou autres signatures qui sont également détectées, comprenant également :

Des moyens, permettant d'après les valeurs de mesure des capteurs inertiels, qui forment à titre de base de mesure la base de comparaison avec d'autres signatures manuscrites ou signatures électroniques, de calculer des valeurs de mesure supplémentaires et de définir pour chaque mesure une ou plusieurs caractéristiques, permettant également de combiner des caractéristiques d'une valeur de mesure correspondant à un vecteur, et de comparer les vecteurs des valeurs de mesure correspondantes des deux signatures manuscrites ou deux signatures électroniques par application d'une mesure de comparaison réciproque, selon lequel on détermine à titre de caractéristiques un ou plusieurs des éléments suivants :

- Position minimum : position du minimum global en un décalage en secondes, mesurée à partir du début de la signature ;
- Position maximum : position du maximum global en un décalage en secondes, mesurée à partir du début de la signature ;
- Distance des points zéro : l'intervalle moyen en secondes de chaque point zéro successif pendant toute la durée de la signature en secondes ;

- Moyenne des minima : valeur moyenne de tous les minima locaux pendant toute la durée de la signature ;
- Moyenne des maxima : valeur moyenne de tous les maxima locaux pendant toute la durée de la signature ;
- Moyenne des pentes positives : moyenne de toutes les pentes ayant une valeur positive aux points zéro entre le début et la fin de la signature ;
- Moyenne des pentes négatives : moyenne de toutes les pentes ayant une valeur négative aux points zéro entre le début et la fin de la signature.

14. Dispositif selon la revendication 13, **caractérisé en ce que** le dispositif d'entrée est en forme de bâton.

15. Dispositif selon la revendication 13, **caractérisé en ce que** le dispositif d'entrée est sous la forme d'un instrument d'écriture (4).

16. Dispositif selon l'une quelconque des revendications 13 à 15, **caractérisé en ce que** le dispositif (2) comprend une interface (14) pour la communication de données avec un moyen de calcul externe et / ou des moyens de stockage et / ou un moyen d'affichage.

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9812661 A
- US 6148093 A
- US 5022086 A

- US 5559895 A
- WO 0062244 A

**In der Beschreibung aufgeführte Nicht-Patentliteratur**

- Signature Verification Based on Complete Acceler-ometry. *IBM TECHNICAL DISCLOSURE BULLE-TIN,* 01. Mai 1977, vol. 19, 4827-4829

- **R. PALMONDON et al.** Automatic signature verifica-tion and writer identification - the state of the art. *Pattern Recognition,* 01. Marz 1989, vol. 22 (2), 107-131